# EUROPEAN PATENT APPLICATION

(11) **EP 1 533 139 A2**
(43) Date of publication of application: **25.05.2005**
(21) Application number: 04026772.6
(22) Date of filing: 11.11.2004
(51) Int. Cl.: B60B 33/00

(54) **Castor for trolleys**

(30) Priority: 24.11.2003 IT MI20032285
(71) Applicant: Luigi Perego S.R.L., 20053 Muggio' (MI) (IT)
(72) Inventor: Perego, Allesandro, 20155 Milano (IT)
(74) Representative: Petruzziello, Aldo

(57) **Abstract**

A castor (100) particularly for trolleys comprises a rolling body (1) supported rotatably by a fork (2) mounted in a support (6, 7) destined to be connected to a trolley. The rolling body (1) comprises: a central body (10) and at least two circular flanges (11, 17, 18) protruding radially form the central body (10) and having a thickness smaller than the width of longitudinal grooves (22) defined between longitudinal ridges (21) of a conveyor belt (20) for trolleys. The central body (10) of the castor comprises at least one facet (12) defining a flat surface. When the edges of the circular flanges (11, 17, 18) are received within longitudinal grooves (22) of the conveyor belt, the facet (12) of the central body abuts against the upper surface of the longitudinal ridges (21) of he conveyor belt to block rotation of the castor body (1).

## Description

The present inventions refers to a castor, particularly for trolleys, such as, for example, shopping trolleys for shopping centres, as well as luggage trolleys for airports, stations and the like.

Fixed castors or swivel castors, which in any case can be locked in position to become fixed, are provided for movement of said types of trolleys.

Reference will be made herein to swivel castor, it nevertheless being understood that the invention also applies to non-swivel castors.

A guidable or swivel castor has a rolling body freely rotatable around a substantially horizontal axis of rotation carried by a support freely rotatable around a substantially vertical axis.

Since the trolley, in order to pass from one floor to another or in any case to overcome changes in level, must be conveyed on inclined conveyor belts, such swivel castors must be provided with a locking system designed to lock them in position on the conveyor belt.

European patent EP 0 775 598 discloses a castor for trolleys. The rolling body comprises two lateral flanges each provided with a groove defined between two ridges which form the element for resting on the ground. Such a castor has a support for blocking the trolley in the form of a bracket connected to the fork so as to protrude laterally from the castor. The bottom end of the stopping bracket is disposed at a short distance from the rolling surface, when the castor rests on a flat surface.

Known conveyor belts generally have a plurality of longitudinal ridges disposed at a standard distance from each other so as to create respective grooves. As a result, when the castor goes onto the conveyor, the two grooves of the castor are disposed on two respective ridges of the belt and the four ridges of the castor sink into four respective grooves in the conveyor. Consequently, the castor is lowered with respect to the upper surface of the ridges of the conveyor and the bottom surface of the locking support of the trolley abuts against the ridges of the conveyor blocking the trolley and keeping the castor raised and therefore free to turn idly.

Said locking system presents various drawbacks, due to the presence of an additional external part which makes the castor more complex, costly and bulky.

It must also be considered that for operation of said locking system, the flanges of the castor must have sufficiently extending ridges along the whole circumference of the castor. This leads to an excessive weakening of said ridges. In fact the ridges of said castors often suffer breakage or damage when they are engaged in the grooves of the conveyor since, in the event of crosswise pushing of the trolley, the ridges of the castors are subject to a high shear stress against the ridges of the conveyor.

Other locking systems are based on the same principle of having additional elements external to the body of the castor.

The object of the present invention is to overcome the drawbacks of the prior art by providing a castor for trolleys having a practical, cheap locking system that is not bulky and is easy to make.

This object is achieved according to the invention with the characteristics listed in appended independent claim 1.

Advantageous embodiments of the invention are apparent from the dependent claims.

The castor, particularly for trolleys, according to the invention comprises:
- a fork supported by a support destined to be connected to a trolley, and
- a rolling body supported rotatably by the fork to turn around a substantially horizontal axis.
The rolling body comprises:
- a central body and
- at least two circular flanges having the same diameter, disposed parallel to each other and protruding radially from the central body to be able to roll on a rolling surface.

The thickness of the at least two circular flanges is smaller than the width of the longitudinal grooves defined between the longitudinal ridges of a conveyor belt for trolleys, so as to be able to be received inside said longitudinal grooves of the conveyor belt.

The main characteristic of the invention is represented by the fact that the central body of the castor comprises at least one facet defining a flat surface disposed along a cord of said circular flanges. In this manner, when the edges of the circular flanges are received inside the longitudinal grooves of the conveyor belt, the facet of the central body of the castor abuts against the upper surface of the longitudinal ridges of the conveyor belt to block rotation of the castor body.

Said system of locking the castor on the conveyor belt is extremely simple, cheap, efficient and not bulky, because it does not require the provision of additional elements. In fact the locking means are formed directly in the central body of the castor.

Further characteristics of the invention will be made clearer by the detailed description that follows, referring to purely exemplary and therefore non limiting embodiments thereof, illustrated in the appended drawings, in which:
Figure 1 is a front view of a swivel castor according to the invention;
Figure 2 is a sectional view taken along the plane of section II-II of Figure 1, in which, for greater clarity, the central body of the castor has not been sectioned;
Figure 3 is a sectional view of the castor body along a plane at right angles to the axis of the castor;
Figures 3A-3E are sectional views, like Figure 3, illustrating five further embodiments of the castor body according to the invention;
Figure 4 is a sectional view of the castor body along the plane of section IV-IV of Figure 3;
Figures 4A and 4B are sectional views, like Figure 4, illustrating two further different embodiments of the castor body;
Figure 5 is a front view illustrating the castor of Figure 1 on a conveyor belt shown in section; and
Figure 6 is a side view, partially in section, illustrating the castor of Figure 1 on a conveyor belt shown in section.

The castor according to the invention, denoted as a whole with reference numeral 100, is described with the aid of the figures.

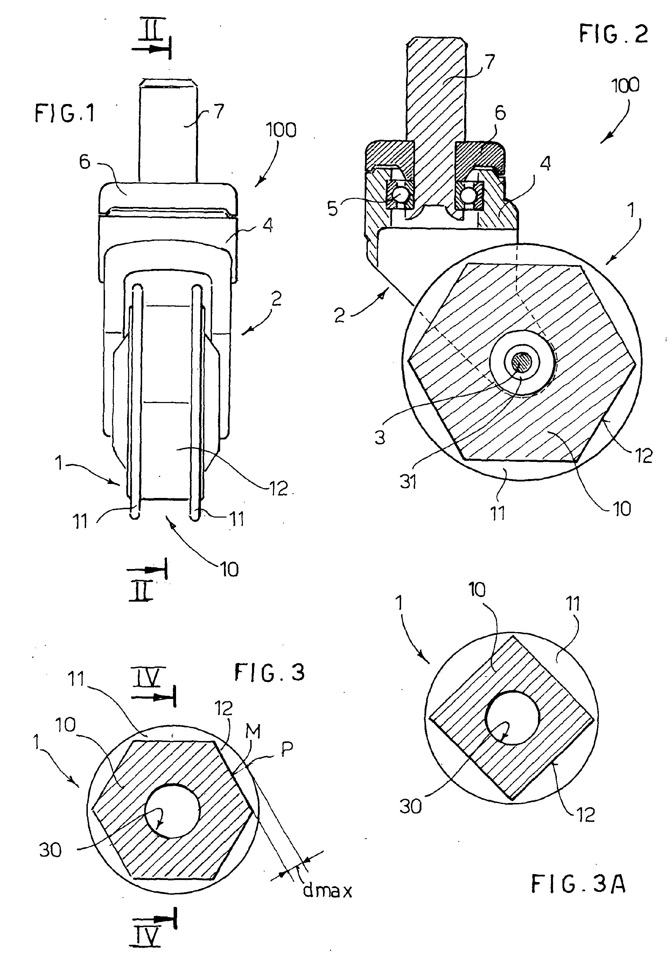

With reference for now to Figures 1 and 2 a swivel castor assembly 100 comprising a rolling body or castor proper 1 supported rotatably by a fork 2 is illustrated. The castor 1 is pivoted to the fork 2 by means of a pin 3 so as to be able to turn freely around a substantially horizontal axis, coinciding with the axis of the pin 3.

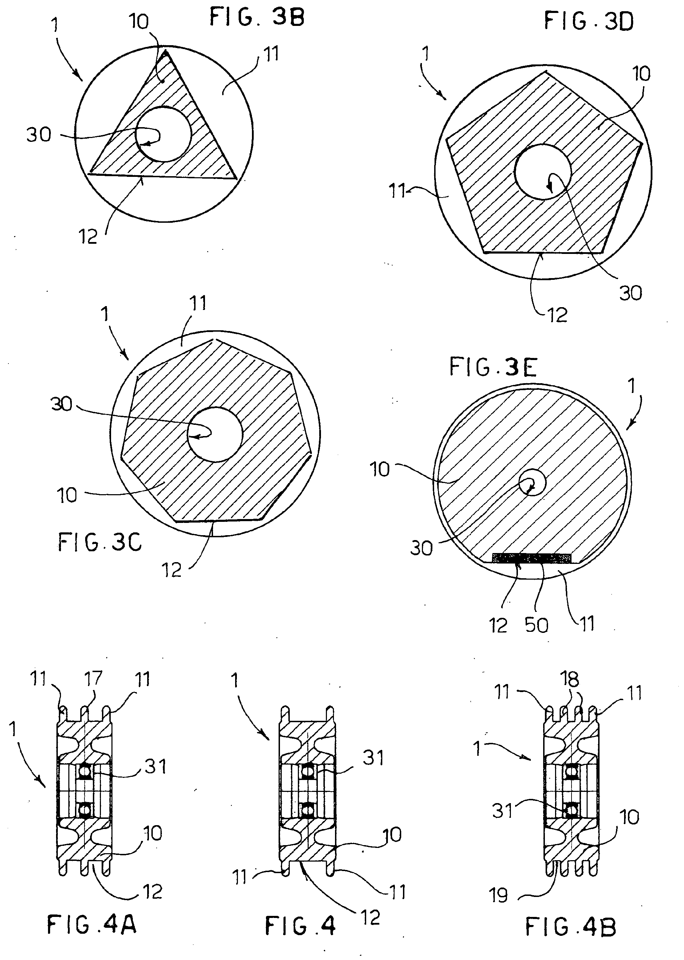

To be exact, as shown in Figures 3 and 4, the castor 1 has a central hole 30 within which a bearing 31 is housed. The outer ring of the bearing 31 is made integral with the body of the castor and the inner ring of the bearing 31 is made integral with the pin 3 of the fork.

As shown in Figure 2, the upper part of the fork 2 comprises a body 4, substantially cylindrical in shape, provided with a cavity of the same shape, designed to house a ball bearing 5.

The outer ring of the bearing 5 is made integral with the seat 4 of the fork, whereas the inner ring is made integral with a substantially vertical pin 7 designed to be connected to a carriage or the like. Also visible in Figure 2 is a cover 6 integral with the pin 7, which covers the bearing 5.

Even if in the figures a swivel castor 100 has been illustrated, said castor can also be fixed and thus the assembly of the bearing 5 can be eliminated so that the pin 7 is fixed with respect to the fork 2.

Alternatively the swivel castor 100 can be made fixed by means of per se known locking systems, designed to lock rotation of the pin 7 with respect to the fork 2.

The castor proper 1 comprises a central body 10 and two lateral flanges 11 protruding radially therefrom. The lateral flanges 11 are circular in shape, are parallel to each other and have the same diameter. In this manner, only the circumferential edge of the flanges 11 rests on the rolling plane, during rolling of the castor 1.

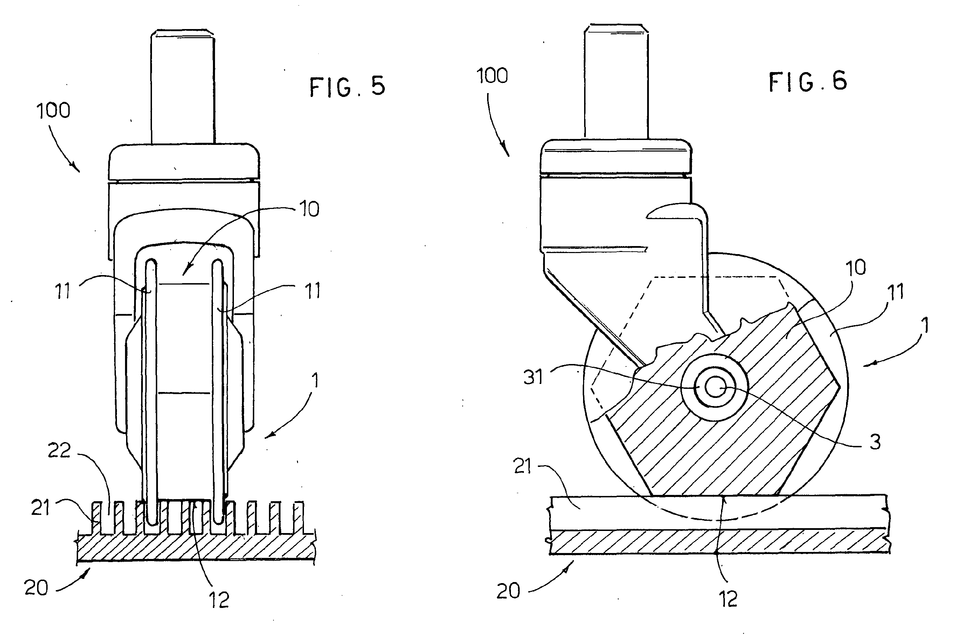

The thickness of each flange 11 is slightly less than 4.5 mm. In fact, as shown in Figure 5, the castor 1 is destined to be conveyed on a conveyor belt 20. The conveyor belt 20 has a plurality of longitudinal ridges 21 which define a plurality of longitudinal grooves 22 in a square wave configuration in cross section.

The width of each groove 22 is standardized and is equal to 4.5 mm. In this manner, the edges of the flanges 11 of the castor 1 can be received in the grooves 22 of the conveyor belt 20.The central body 10 of the castor defined between the two lateral flanges 11 has at least one facet 12, that is to say a substantially flat face. As shown better in Figure 3, the facet 12 is formed so as to substantially follow the profile of a cord of the circumference defined by the flange 11.

The maximum distance dₘₐₓ between the facet 12 and the outer edge of the flange 11 is given by the segment MP defined by the midpoint M of the facet 12 and the point P of intersection of the circumference of the flange 11 with a radial straight line passing through M.

Said distance dₘₐₓ is selected so as to be less than the depth of the grooves 22 of the conveyor 20, that is to say dₘₐₓ is less than the height of ridges 21 of the conveyor belt 20. As a result, as shown in Figures 5 and 6, the edges of the flanges 11 of the castor sink into the grooves 22 of the conveyor belt 20, until the facet 12 of the central body abuts against the upper surface of the ridges 21 of the conveyor belt, thus preventing rolling of the castor 1 which is locked in position on the belt 20.

In the drawings the facet 12 is illustrated formed in the central body 10 of the castor between the two lateral flanges 11. However, the facet 12 can also be formed on the outer side surface of at least one of the two lateral flanges 11, fulfilling the same function of locking of the castor 1 as described previously. Alternatively the central body 10 can protrude outward with respect to the flanges 11 and the facet 12 can be on the central body 10 on the outside of the flanges 11.

The body of the castor proper 1 is preferably made by injection moulding of sufficiently hard plastic materials.

The central body 10 of the castor can be made in the shape of a polyhedron whose sides are represented by the facets 12. In Figure 3 the central body 10 is shaped in cross section like a regular hexagon inscribed in the circumference defined by the lateral flange 11.

As shown in Figures 3A-3D, the central body 10 of the castor can take on other geometric shapes, such as, respectively, a square, isosceles triangle, heptagon and pentagon.

It should be noted that if a regular polygon with many sides is used, such as the heptagon of Figure 3C, inscribed in the circumference defined by the lateral flange 11, the surface of the lateral flanges 11 which remains uncovered with respect to the central body 10 is minimal. As a result, the weakening of the lateral flanges 11, which are subject to high shear stresses when they are in the grooves 22 of the conveyor belt and the trolley suffers crosswise thrusts, is also minimal.

Normally as the size of the castor increases, the number of sides of the inscribed polygon also increases.

In a preferred embodiment of the invention, illustrated in Figure 3E, the central body 10 of the castor is substantially circular in shape and its diameter is slightly smaller than the diameter of the ridges 11 so as to minimize the exposed surface of the ridges 11 and thus weakening thereof.

In this case a single facet 12 is made in the circular central body 10. However, even if not shown in Figure 3E, two facets 12 disposed in diametrically opposite positions can be formed.

A magnetic insert 50 in the form of a magnet having a substantially flat bottom surface able to couple in a magnetic coupling relationship with the longitudinal ridges 21 of the conveyor belt is inserted in the facet 12.

It is clear that the magnet 50 can also be inserted in the facets 12 of the central body of the other embodiments previously described.

In the case of the circular central body, as illustrated in Figure 3E, when the castor goes onto the conveyor belt 20, the lateral flanges 11 enter into the grooves 22 of the conveyor and the central circular body 10 turns on the ridges 21 of the conveyor, until the facet 12 with the magnet 50 abuts against the ridges 21 of the conveyor, locking the castor 1 and thus the trolley in position.

Alternatively, instead of the magnetic insert 50 an insert or a peripheral coating of the central body 10 of the castor can be provided, in a material having a high coefficient of friction, so as to avoid slipping or sliding of the castors 1 on the conveyor belt 20. Among the materials with a high coefficient of friction, rubber can be chosen, for example.

Furthermore, to reduce the stress on the two lateral flanges 11, the castor 1 can provide, as shown in Figure 4A, an intermediate flange 17 disposed in a suitable position between the two lateral flanges 11 or, as shown in Figure 4B, two intermediate flanges 18, disposed equidistant between the two lateral flanges 11, in which the central flange 17 and the intermediate flanges 18 have the same diameter as the lateral flanges 11 to be able to be received in respective grooves 22 of the conveyor belt.

Furthermore in Figure 4B the two intermediate flanges 18 form with the two lateral flanges 11 three gaps 19 having such a width as to receive the ridges 21 of the conveyor belt 20.

In this case, both the central flange 17 and the two intermediate flanges 18 sink into the grooves 22 of the conveyor belt, until the facet 12 abuts against the upper surface of the ridges 21 of the conveyor belt.

Numerous variations and modifications of detail within the reach of a person skilled in the art can be made to the present embodiments of the invention, without departing from the scope of the invention as set forth in the appended claims.

## Claims

1. A castor (100) particularly for trolleys comprising:
- a fork (2) supported by a support (7) intended to be connected to a trolley,
- a rolling body (1) rotatably supported by said fork (2) to rotate around a substantially horizontal axis, said rolling body (1) comprising:
- a central body (10) and
- at least two circular flanges (11, 17, 18) of the same diameter, parallel to each other and protruding radially from said central body (10) to be able to roll on a rolling surface, the thickness of said at least two circular flanges (11, 17, 18) being smaller than the width of the longitudinal grooves (22) defined between the longitudinal ridges (21) of a conveyor belt (20) for trolleys,
**characterised in that**
said central body (10) of the castor comprises at least one facet (12) defining a flat surface disposed along a cord of said circular flanges (11, 17, 18), so that, when the edges of said circular flanges (11, 17, 18) are received inside said longitudinal grooves (22) of the conveyor belt, said facet (12) of the central body of the castor abuts against the upper surface of the longitudinal ridges (21) of the conveyor belt to block rotation of the castor body (1).

2. A castor (100) according to claim 1, **characterised in that** said rolling body (1) comprises two circular lateral flanges (11) and said at least one facet (12) of the central body is comprised between the two lateral flanges (11).

3. A castor (100) according to claim 1, **characterised in that** said rolling body (1) comprises at least two lateral circular flanges and said at least one facet of the central body is disposed externally with respect to said two lateral flanges.

4. A castor (100) according to any one of the preceding claims, **characterised in that** a magnetic insert or magnet (50) is inserted **in that** said at least one facet (12).

5. A castor (100) according to any one of claims 1 to 3, **characterised in that** said at least one facet (12) comprises an insert or a coating of a material having a high coefficient of friction.

6. A castor (100) according to any one of the preceding claims, **characterised in that** said central body (10), along a sectional plane at right angles to the axis of rolling of the castor body (1), has a substantially circular shape having said at least one facet (12) and having a diameter slightly smaller than the diameter of the lateral flanges (11).

7. A castor (100) according to claims 1 to 5, **characterised in that** said central body (10) of the castor, along a plane at right angles to the axis of rolling of the castor body, is shaped like a polygon and has a number of facets (12) equal to the number of sides of said polygon.

8. A castor (100) according to claim 7, **characterised in that** said central body (10) is shaped like a polygon inscribed in the circumference defined by said circular flanges (11).

9. A castor (100) according to claim 7 or 8, **characterised in that** said central body (10) is shaped like a polygon with equal sides.

10. A castor (100) according to any one of claims 7 to 9, **characterised in that** said central body (10) is shaped like a polygon such as a triangle, square, pentagon, hexagon or heptagon.

11. A castor (100) according to any one of the preceding claims, **characterised in that** the maximum distance (dₘₐₓ) between said at least one facet (12) of the central body and the peripheral edge of said circular flange (11) is less than the depth of said grooves (22) of the conveyor belt (20).

12. A castor (100) according to any one of claims 2 to 11, **characterised in that** it comprise an intermediate circular flange (17), disposed between said two lateral circular flanges (11), designed to be received inside a groove (22) of said conveyor belt.

13. A castor (100) according to any one of claims 2 to 11, **characterised in that** it comprises two intermediate circular flanges (18), disposed equidistant between said two lateral circular flanges (11), designed to be received inside respective grooves (22) of said conveyor belt and defining with the two lateral flanges (11) three gaps (19) able to receive respective longitudinal ridges (21) of said conveyor belt.

14. A castor (100) according to any one of the preceding claims, **characterised in that** said rolling body (1) is formed in a single piece or in a plurality of pieces through injection moulding of plastic materials.

15. A castor (100) according to any one of the preceding claims, **characterised in that** said support (7), which can be connected to the trolley, is mounted rotatably with respect to the fork (2) along a vertical axis, so as to make the castor (100) into a swivel castor.

16. A trolley **characterised in that** it comprises at least one castor (100) according to any one of the preceding claims.
